# EUROPÄISCHE PATENTSCHRIFT

(11) **EP 3 864 547 B1**
(45) Veröffentlichungstag und Bekanntmachung des Hinweises auf die Patenterteilung: **12.06.2024**
(21) Anmeldenummer: 19797158.3
(22) Anmeldetag: 10.10.2019
(51) Int. Cl.: G06F 11/36, G06F 21/56, G06F 9/455

(54) **VERFAHREN ZUR DETEKTION SICHERHEITSRELEVANTER DATENFLÜSSE**
METHOD FOR DETECTING SAFETY-RELEVANT DATA FLOWS
PROCEDE DE DETECTION DE FLUX DE DONNEES IMPORTANTS POUR LA SECURITE

(30) Priorität: 11.10.2018 AT 508892018
(43) Veröffentlichungstag der Anmeldung: 18.08.2021
(73) Patentinhaber: AVL List GmbH, 8020 Graz (AT)
(72) Erfinder: PRILLER, Peter, 8111 Gratwein-Straßengel (AT)
(74) Vertreter: Patentanwälte Pinter & Weiss OG
(86) Internationale Anmeldenummer: PCT/AT2019/060339
(87) Internationale Veröffentlichungsnummer: WO 2020/073072

(56) Entgegenhaltungen:
- EP-A1- 3 001 313
- WO-A1-2016/141998
- US-B1- 8 127 360

## Beschreibung

Die Erfindung betrifft ein Verfahren zur Detektion sicherheitsrelevanter Datenflüsse, welche in einem Hardwaresystem während der Ausführung von zumindest einer Datenverarbeitungsaufgabe auftreten, wobei zur Abbildung des Hardwaresystems in ein Simulationsmodell das Hardwaresystem in eine Vielzahl an Hardwarekomponenten eingeteilt wird, die über zumindest eine Kommunikationseinrichtung miteinander verbunden sind und über diese Kommunikationseinrichtung Daten austauschen können, wobei jede Hardwarekomponente zumindest eine Kommunikationseinheit, zumindest eine Speichereinheit und zumindest eine Prozessoreinheit aufweist, wobei das Hardwaresystem als ein in einer Simulationsumgebung lauffähiges Simulationsmodell abgebildet wird, und die Datenflüsse, die während der Ausführung einer Datenverarbeitungsaufgabe auftreten, mit dem Simulationsmodell des Hardwaresystems simuliert werden, wobei während der Simulation in der Simulationsumgebung die von den einzelnen Hardwarekomponenten ausgeführten Datenflüsse beobachtet und protokolliert werden, wobei die Datenflüsse ein Erstellen einer Kopie eines an einer Speicheradresse einer Speichereinheit gespeicherten Datums an einer anderen Speicheradresse derselben Speichereinheit oder einer anderen Speichereinheit, das Verändern eines Datums oder der Kopie eines Datums, das Löschen eines an einer Speicheradresse einer Speichereinheit gespeicherten Datums, das Übermitteln eines Datums von einer Hardwarekomponente über eine von mehreren Hardwarekomponenten genutzte Kommunikationseinrichtung zu einer oder mehreren anderen Hardwarekomponente(n), oder das Übermitteln und Empfangen von Daten über externe Schnittstellen des Hardwaresystems beschreiben, wobei kritische Daten definiert werden, die in zumindest einer Speichereinheit des Hardwaresystems gespeichert sein und/oder über eine Schnittstelle in das Hardwaresystem transferiert werden können.

Eine typische Aufgabe in Systemen der Informations- und Kommunikationstechnologien (IKT) ist das Verhindern eines Zugriffs auf Information (Daten) durch unberechtigte Anwender bzw. Applikationen. Zu diesem Zweck werden im Stand der Technik unterschiedliche Verfahren realisiert, zu denen etwa Zugriffssteuerungen (die auch mit den englischen Fachbegriffen "Access-Rights" oder "Access-Policies" bezeichnet werden), eine Verwaltung der Zugriffsberechtigungen ("Authorization") und das Isolieren von Prozessen und/oder Speicherräumen (z.B. Sandboxing) zählen. Auf tieferer Ebene kann das zum Beispiel in der Hardware über Speicherverwaltungseinheiten ("Memory-Management-Units" - MMU) realisiert werden.

Durch Konzept- oder Implementierungsfehler, gezielte Angriffe auf die Authentifizierung, unbewusste Informationsflüsse über Nebenwege ("Side-Channels") und ähnliche Mechanismen können sich Möglichkeiten für unerwünschte Zugriffe auf Daten ergeben ("Leaks"). Ein Angriff ("Attack") nützt dann eine oder mehrere Schwachstellen ("Vulnerabilities") aus um Einfluss auf das IKT System und/oder einen Zugriff auf Daten zu erhalten, mit einem bestimmten Ergebnis ("Impact"). Damit können die Vertraulichkeitsregeln ("Confidentiality") eines Systems unterlaufen bzw. gebrochen werden.

Confidentiality-Eigenschaften von Hardware- bzw. Computersystemen werden primär durch Einhaltung von Prinzipien und Vorschriften in Design und Implementierung und Betrieb erfüllt, wie zum Beispiel:
- Security-Per-Design,
- Vorgehen gemäß bewährter Erfolgsmodellen ("Best Practice"),
- Einhaltung von Prozessen bzw. Normen (z.B. ISO/IEC 27001 und 27002, ISO 15408/Common Criteria, NIST CSF, SAE J3061),
- Prinzipien wie In-Memory-Encryption,
- Address Space Layout Randomization (ASLR),
etc.

Entwicklungsbegleitend, und vor allem abschließend sowie nach jedem Integrationsschritt ist der Test der Implementierung und damit des resultierenden Verhaltens erforderlich. Das kann etwa durch Review von Architektur und Implementierung der Soft- und Hardware geschehen (Audits). Diese Vorgangsweise ist wirkungsvoll und seit Jahrzehnten im Einsatz, ist aber auch sehr (Zeit-)aufwändig und schwer automatisierbar. Vor allem müssen aber die Quellen (Code, Modelle) des Systems verfügbar sein. Das ist, etwa aus Gründen der Geheimhaltung, nicht immer erwünscht und oft auch gar nicht möglich (z.B. bei Verwendung von Software-Bibliotheken von Dritten).

Andere Möglichkeiten kommen aus der statischen Code-Analyse (diese ist automatisierbar, aber nicht sehr effektiv im Auffinden von Leaks), oder eine Modell-Inspektion (die wiederum eine Offenlegung der Quellen erfordert). Gemeinsam ist diesen Methoden auch, dass Angriffe auf die Verarbeitungs-Kette (inklusive Übertragung, Speicherung und Abarbeitung) und Schwachstellen darin nicht erkannt werden können. Dies betrifft etwa die Kompilierung, das Linking, die Übertragung (Download, etc.), Speicherung (z.B. auf Flash-Memory, Harddisk, etc.), die Ausführung in der Software (Interpreter, Virtual Machine, etc.) und schließlich die Hardware. Aus diesem Grund setzen viele erfolgreiche Angriffe genau hier an:
Einen Angriff über eine Sandbox beschreiben beispielsweise Lipp M., Gruss D., Schwarz M., Bidner D., Maurice C., Mangard S. (September 2017) in dem Artikel "Practical Keystroke Timing Attacks in Sandboxed JavaScript", in: Foley S., Gollmann D., Snekkenes E. (eds) Computer Security - ESORICS 2017, Lecture Notes in Computer Science, Bd. 10493.

Eine Cache-Attack ist beispielsweise von Gruss, D., Maurice, C., Wagner, K., & Mangard, S. (Juli 2016) in "Flush+ Flush: a fast and stealthy cache attack", in: International Conference on Detection of Intrusions and Malware, and Vulnerability Assessment (S. 279-299). Springer, Cham, beschrieben.

Eine auf den Speicher gerichtet Attacke beschreiben Gruss, D., Maurice, C., & Mangard, S. (Juli 2016) in "Rowhammer.js: A remote software-induced fault attack in javascript", in: International Conference on Detection of Intrusions and Malware, and Vulnerability Assessment (S. 300-321), Springer, Cham.

Weiters beschreibt die WO 2016/141998 A1 eine Vorrichtung und ein Verfahren zur Abbildung eines Hardwaresystems bzw. Teile eines Hardwaresystems in einer Simulation. In der Offenbarung wird das gesamte Hardwaresystem und alle in dem Hardwaresystem durchgeführten Daten und Datenflüsse simuliert. Dadurch ist es nur schwer bis gänzlich unmöglich sicherheitsrelevante Datenflüsse schnell zu identifizieren und dadurch Sicherheitslücken im Hardwaresystem zu identifizieren und auszuräumen.

Neben dem statischen Test gibt es auch dynamische Tests, die das Systemverhalten während der Ausführung untersuchen. Dynamisches Testen ergänzt statisches Testen vor allem für Szenarien, die keinen bekannten bzw. neuen Mustern (nach denen statisch noch nicht gesucht werden konnte) entspricht, sowie für Fälle, die in der Analyse aufgrund Komplexität bzw. nicht betrachtete Eigenschaften statisch nicht gefunden werden. Falls es keinen Zugriff auf die vollständige Systembeschreibung und den Source Code gibt, sind die Möglichkeiten statischer Tests ohnehin stark eingeschränkt, was die Wichtigkeit des dynamischen Testens noch weiter erhöhen kann.

Dynamische Testmethoden basieren meist auf dem (manuellen oder automatischen) Ausführen definierter Anwendungsszenarien ("Test Cases"). Die Herausforderung dabei liegt unter anderem
(i) in der geeigneten Gestaltung dieser Test Cases, um auf Sicherheitsprobleme aufmerksam zu werden,
(ii) in der Ausführung (idealerweise erfolgt diese automatisiert, um eine möglichst große Anzahl von Testfällen in gegebener Zeit ausführen zu können), und
(iii) in der korrekten Bewertung des Testergebnisses, insbesondere dem Erkennen einer Security Schwachstelle.

Als "Test Cases" werden im Zusammenhang mit der gegenständlichen Erfindung bevorzugt Vorgaben bezeichnet, welche die Vorbedingungen, Inputs, Ausführungsbedingungen, Testverfahren und/oder die zu erwartenden Ergebnisse eines bestimmten Tests bzw. einer bestimmten Simulation definieren.

J., Hu, W., Irturk, A., Tiwari, M., Sherwood, T., & Kastner, R. beschreiben im Artikel "Information flow isolation in I2C and USB" (Juni 2011) in: Proceedings of the 48th Design Automation Conference (S. 254-259), ACM, eine speziell modifizierte Hardware, beispielsweise in einem I2C Peripheriebaustein, in der Register und interne Busse um beispielsweise ein zusätzliches Bit pro Datenwort erweitert wurden. Dieses Bit (das im Artikel als "taint" bezeichnet wird) markiert "kritische" Information und "wandert" mit dieser durch die Hardware. Verarbeitungsschritte der Daten (z.B. logische Verknüpfung) werden erweitert um dieses Markierungsbit, somit kann der Einfluss der kritischen Daten auf das Ergebnis dargestellt und weiterverfolgt werden. Ohne die speziell modifizierte Hardware ist diese Vorgehensweise jedoch nicht umsetzbar.

Die gegenständliche Erfindung hat unter anderem die Aufgabe, dynamische Tests ohne Hardwareänderungen zu ermöglichen, wobei das Verfahren nicht nur für Standard-Hardware verwendbar sein soll, sondern insbesondere auch im Bereich der industriellen Automatisierung und für eingebettete Systeme, etwa im Automobilbereich, eingesetzt werden kann.

Diese und weitere Aufgaben werden erfindungsgemäß durch ein Verfahren der eingangs genannten Art gelöst, welches die kennzeichnenden Merkmale des unabhängigen Anspruchs aufweist.

Als "Simulationsumgebung" wird im Zusammenhang mit der gegenständlichen Erfindung insbesondere ein Computersystem mit darauf laufender Simulationssoftware bezeichnet, welches zur Simulation des Simulationsmodells geeignet ist. Im Gegensatz zum echten Hardwaresystem erlaubt die Simulationsumgebung, insbesondere die aktuellen Zustände der Daten, die etwa in Speichern und Registern vorhanden sind, sowie alle Vorgänge, die diese Daten verändern, zu überwachen. Dadurch ist es in der Simulationsumgebung insbesondere möglich, die Erstellung, Übermittlung und Löschung von Daten zu überwachen. Entsprechende Simulationsumgebungen, die zur Simulation eines Simulationsmodells eines bestimmten Hardwaresystems geeignet sind, sind im Fachbereich bekannt und es liegt im Können des Durchschnittsfachmanns, bei Kenntnis der hierin offenbarten Lehren, eine geeignete Simulationsumgebung für ein vorgegebenes Hardwaresystem auszuwählen und dieses Hardwaresystem in ein Simulationsmodell abzubilden, welches von der gewählten Simulationsumgebung ausführbar ist.

Als "Instanz" wird im Zusammenhang mit der gegenständlichen Beschreibung eine Kopie eines kritischen Datums bezeichnen, welche zumindest zu einem bestimmten Zeitpunkt (z.B. im Entstehungszeitpunkt / bei der Instanziierung) direkt von dem betrachteten kritischen Datum abhängt. Eine Instanz kann somit beispielsweise eine Kopie eines kritischen Datums, aber auch eine Kopie und (Um)Codierung des Datums sein. Eine Umkodierung erfolgt beispielsweise dann, wenn das Ursprungsdatum eine Integer-Zahl und die Instanz eine Float-Repräsentation davon ist).

Als "Hardwaresystem" wird im Zusammenhang mit der gegenständlichen Offenbarung allgemein eine Gesamtheit an physischen Komponenten (d.h. die elektronischen und mechanischen Bestandteile) eines datenverarbeitenden Systems und deren Peripherie bezeichnet. Bei dem Hardwaresystem kann es sich insbesondere um ein Computersystem gemäß einer bekannten Systemarchitektur handeln. Ein Hardwaresystem kann jedoch auch eine zusammenwirkende Struktur mehrerer Hardwarekomponenten sein, die keinem "Computersystem" im engeren Sinn entspricht, beispielsweise ein Sensornetzwerk oder ein Ad-Hoc-Netzwerk mit mehreren Hardwarekomponenten.

Erfindungsgemäß wird zur Abbildung des Hardwaresystems auf ein Simulationsmodell das Hardwaresystem in eine Vielzahl an Hardwarekomponenten eingeteilt, die über zumindest eine Kommunikationseinrichtung miteinander verbunden sind und über diese Kommunikationseinrichtung Daten austauschen können, wobei jede Hardwarekomponente zumindest eine Kommunikationseinheit, zumindest eine Speichereinheit und zumindest eine Prozessoreinheit aufweist. Durch geeignete Wahl dieser Einteilung, die die Basis für die Modellierung des Simulationsmodells bildet, kann das Hardwaresystem auf unterschiedlicher Ebene simuliert und beobachtet werden, zum Beispiel auf der Ebene einer abstrahierten Maschine bzw. Virtual Machine, auf CPU-Instruktionsebene, auf Gatter- bzw. Bit-Ebene, auf Kommunikations- bzw. Bus-Ebene, etc.

In einer vorteilhaften Ausführungsform kann die Definition kritischer Daten durch die Definition von Dateneigenschaften erfolgen. Als Dateneigenschaften werden im Zusammenhang mit der gegenständlichen Offenbarung insbesondere Attribute zum Dateninhalt, zum Entstehungs- bzw. Erstellungszeitpunkt, zum Verarbeitungszeitpunkt, zur Adresse im Speicher, Abhängigkeiten vom Systemzustand, Abhängigkeiten von anderen (kritischen) Daten, etc., und daraus definierbare Kombinationen verstanden. Dies erlaubt beispielsweise eine Prüfung ohne Kenntnis des Sourcecodes der Softwarekomponenten.

Ein Beispiel für eine relevante Kombination von Datenattributen ist das Beobachten von Laufzeit, beispielsweise aus Entstehungs- und Löschzeitpunkt von Call Stack Daten. Eine Art von Side-Channel-Attacks nützt beispielsweise Information über die Laufzeit der Schlüssel-Prüfroutine um indirekt Information über den Schlüssel abzugreifen, siehe Kocher, P. C. (1996, August), Timing attacks on implementations of Diffie-Hellman, RSA, DSS, and other systems. In Annual International Cryptology Conference (S. 104-113). Springer, Berlin, Heidelberg.

In vorteilhafter Weise kann bei Identifizieren zumindest bestimmter sicherheitsrelevanter Datenflüsse eine Warnmeldung erstellt werden. Die Warnmeldung kann umgehend auf einer zur Steuerung der Simulationsumgebung verwendeten Benutzerschnittstelle eines Steuerungs- und Überwachungssystems angezeigt werden, sodass der Tester entscheiden kann, ob er die Simulation abbricht oder weiterlaufen lässt. Gegebenenfalls kann bei Auftreten einer Warnmeldung die Simulation automatisch abgebrochen werden, wenn dies gewünscht ist.

In vorteilhafter Weise können die identifizierten sicherheitsrelevanten Datenflüsse in einer Auswertung gespeichert werden, wobei die Auswertung gegebenenfalls graphisch dargestellt wird. Dies erlaubt eine Protokollierung und Reporting der durchgeführten Tests.

Erfindungsgemäß wird auch der Ablauf der Simulation protokolliert. Zudem kann gegebenenfalls der umfassende Ablauf (einschließlich der Vorgeschichte) mit aufgezeichnet und gegebenenfalls mit dem Protokoll der Datenflüsse in Beziehung gesetzt werden, was eine spätere Analyse / Diagnose / Fehlersuche unterstützt.

In vorteilhafter Weise kann sich die Datenverarbeitungsaufgabe aus dem Ausführen einer Anwendungssoftware, welche gegebenenfalls unter Abarbeitung definierter Test-Cases betrieben wird, ergeben. Dies erlaubt das Testen von Anwendungssoftware in Teilen oder im Ganzen und den Gewinn von Erkenntnissen über das Zusammenwirkend der Anwendungssoftware mit darunter liegenden Softwareteilen (Middleware, Frameworks, Bibliotheken, Betriebssystem, etc.) und dem gegebenen Hardwaresystem.

Im erfindungsgemäßen Verfahren werden Abschnitte des Hardwaresystems in eine erlaubte Domäne und eine verbotene Domäne eingeteilt. Dies erlaubt es, die Trefferrelevanz zu erhöhen.

Die Einteilung in eine erlaubte und eine verbotene Domäne kann beispielsweise im Zuge der Definition kritischer Daten, im Zuge der Modellierung des Simulationsmodells oder auch noch später erfolgen, wobei die Einteilung insbesondere entweder aufgrund der Erfahrung von einem Programmierer oder einer Testperson festgelegt werden kann, oder auf Basis früher durchgeführter Testverfahren von vergleichbaren Hardwaresystemen vorgegeben sein kann. Bei Kenntnis der hierin offenbarten Lehren liegt es im Können des Durchschnittsfachmanns, eine entsprechende Einteilung vorzunehmen.

Zumindest die folgenden Datenflüsse werden erfindungsgemäß als sicherheitsrelevante Datenflüsse identifiziert: Übermitteln eines kritischen Datums oder Instanzen davon über eine Kommunikationseinrichtung der verbotenen Domäne, Löschen eines kritischen Datums während zumindest eine Instanz des kritischen Datums fortbesteht, Erstellung einer Instanz eines kritischen Datums in der verbotenen Domäne, Fortbestand eines kritischen Datums nach einem bestimmten Zeitpunkt und/oder Systemzustand, insbesondere nach Fertigstellung der Datenverarbeitungsaufgabe, beziehungsweise nach Terminierung einer Anwendung. Gegebenenfalls können durch Beobachtung der Abläufe zusätzliche Regeln, wie etwa eine Abhängigkeit der Kritikalität von der Zeit, den Systemzuständen, etc., berücksichtigt werden. (Dies bedeutet im Wesentlichen, dass die Definition der erlaubten und verbotenen Domäne in Abhängigkeit vom Simulationsablauf verändert wird.)

Als "sicherheitsrelevante Datenflüsse" werden im Zusammenhang mit der gegenständlichen Erfindung beispielsweise Datenflüsse bezeichnet, die einem bestimmten, für den jeweiligen Anwendungsfall definierten Kriterium entsprechen, beispielsweise einem der im vorhergehenden Absatz angeführten Kriterien.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine schematische Darstellung der am erfindungsgemäßen Verfahren beteiligten Einheiten und der Verfahrensschritte,
Fig. 2 eine schematische Darstellung eines Hardwaresystems und der darauf laufenden Software,
Fig. 3 eine schematische Darstellung einer Simulationsumgebung, in der das Hardwaresystem der Fig. 2 als Simulationsmodell abgebildet ist,
Fig. 4 eine schematische Darstellung der in der Simulationsumgebung ausgeführten Simulation und
Fig. 5 ein Diagramm eines graphisch aufbereiteten Ergebnisses einer Simulation.

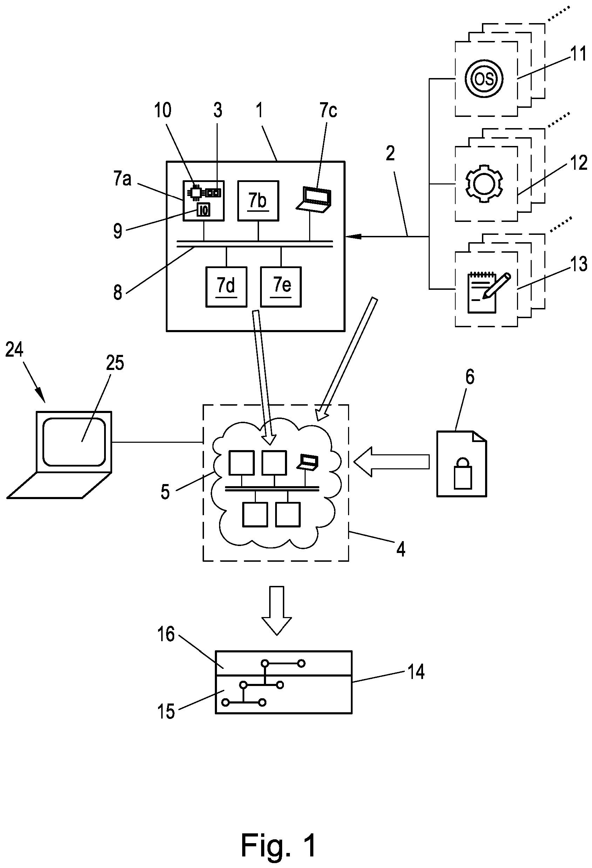

In Fig. 1 sind die wesentlichen Entitäten des erfindungsgemäßen Verfahrens abstrahiert dargestellt. Ein Hardwaresystem 1 besteht allgemein aus mehreren Hardwarekomponenten 7 (in Fig. 1 sind die Hardwarekomponenten zur Unterscheidung mit den Kleinbuchstaben a bis e ergänzt), die über zumindest eine Kommunikationseinrichtung 8 miteinander verbunden sind und über diese Kommunikationseinrichtung 8 Daten austauschen können. Zu diesem Zweck verfügt jede Hardwarekomponenten 7 üblicherweise über eine Kommunikationseinheit 9, eine Speichereinheit 3 und eine Prozessoreinheit 10, wie dies in Fig. 1 symbolisch für die Hardwarekomponente 7a dargestellt ist. Die in Fig. 1 dargestellte Hardwarekomponente 7c kann beispielsweise ein herkömmlicher (Notebook-)Computer sein, auf dem beispielsweise eine Steuersoftware für andere Hardwarekomponenten läuft. Das Hardwaresystem 1 kann auch "verschachtelte" Hardwarestrukturen aufweisen, d.h. dass ein Hardwaresystem ein Teil eines übergeordneten Hardwaresystems ist. Ein Hardwaresystem 1 (oder eine Hardwarekomponente 7 eines Hardwaresystems 1) kann beispielsweise auch als SoC (System on a Chip) ausgeführt sein. Zu Beispielen für ein solches Hardwaresystem zählen etwa Mikroprozessoren der XC27x8X-Serie von Infineon. Die Kommunikationseinrichtung 8 wird dabei durch ein internes Bussystem ausgebildet, die Kommunikationseinheit 9 kann in der Busankopplung der CPU gesehen werden, als Speichereinheit 3 sind die internen Register und der Cache anzusehen und die Prozessoreinheit 10 wäre die CPU des SoC. Gegebenenfalls können Peripherie-Komponenten, wie etwa ein CAN Controller, eine PWM-Controller oder andere, als weitere Hardwarekomponenten 7 des Hardwaresystems 1 definiert werden.

Je nach Darstellungsebene können Hardwarekomponenten 7 des Hardwaresystems 1 Einheiten verschiedener Art umfassen. Zu weiteren Beispielen für Hardwarekomponenten 7 zählen:
- Steuergeräte in Fahrzeugen (z.B. eine ECU oder andere Steuereinheiten für Motor, Getriebe, ABS, ESP, etc.),
- intelligente Sensorkonten in einem Sensornetzwerk, beispielsweise in einem loT-System, die beispielsweise über ein WSN (Wireless-Sensor-Network) kommunizieren,
- CPU-Module und/oder I/O-Module in einer speicherprogrammierten (Industrie-) Steuerung (SPS),
- Knoten in Cloud bzw. Rechner-Clustern.

In Zusammenhang mit einem herkömmlichen PC könnte beispielsweise die Haupt-CPU als eine Hardwarekomponente 7 definiert werden, wobei die Peripherie-Controller, wie etwa Disk, Keyboard, Graphikkarte, etc. als weitere Hardwarekomponenten definiert werden könnten.

Die Kommunikationseinrichtung 8 kann ein internes oder externes Bussystem, oder eine andere kabelgebundene oder kabellose Kommunikationseinrichtung 8 sein. Zu Beispielen für Kommunikationseinrichtungen 8 zählen geräteinterne Busse, wie etwa PCI, PCI-X, PCIe, AGP, USB, I2C, etc., und externe bzw. Feldbusse wie etwa CAN, LIN, Flexray, (automotive) Ethernet, MOST, etc. Im Fahrzeugbereich werden dies allgemein als "In-Vehicle-Networks-IVN" bezeichnet.

Abweichend von der in Fig. 1 dargestellten Form kann das Hardwaresystem 1 auch unterschiedliche Anordnungen von Hardwarekomponenten 7 und Kommunikationssystemen 8 umfassen, beispielsweise kann das Hardwaresystem 1 eine komplexere Vernetzung aufweisen, wobei zum Beispiel mehrere hierarchische Busse, Stern- oder Maschen-Netzwerke, etc. umfasst sind. Ein in der Praxis relevantes Beispiel für ein Hardwaresystem 1 sind eingebettete Systeme.

Als "eingebettetes System" wird im Zusammenhang mit der gegenständlichen Offenbarung ein Hardwaresystem 1 bezeichnet, welches in einem technischen Kontext eingebunden ist. Eingebettete Systeme kommen beispielsweise in Geräten der Medizintechnik, in Haushaltsgeräten, wie etwa Waschmaschinen oder Kühlschränken, in Unterhaltungselektronik, wie etwa Fernsehern, DVD-Playern, Set-Top-Boxen, Routern oder Mobiltelefonen, oder verschiedenen Straßen-, Schienen- oder Wasserfahrzeugen, wie etwa Kraftfahrzeugen, Flugzeugen oder Schiffen, anderen Transporteinrichtungen, in industriellen Anlagen, aber auch in der Raumfahrt zur Anwendung.

Im Fall eines komplexen Gesamtsystems (d.h. in einem komplexen technischen Kontext) kann es sich bei dem eingebetteten System um eine Vernetzung einer Vielzahl von ansonsten autonomen, eingebetteten (Sub-)Systemen handeln, die über unterschiedliche Kommunikationseinrichtungen 8, beispielsweise mehrere Bus-Systeme mit jeweils unterschiedlichen Sicherheits-, Datendurchsatz- und/oder Geschwindigkeitsspezifizierungen, untereinander vernetzt sind.

Das Hardwaresystem 1 und/oder einzelne oder alle der darin enthaltenen Hardwarekomponenten 7 weisen optional ein Betriebssystem 11, einschließlich einer Laufzeitumgebung, Laufzeitbibliotheken, Treiber etc., auf, das ihnen in an sich bekannter Weise ermöglicht, Datenverarbeitungsaufgaben 2 abzuarbeiten, bzw. an deren Abarbeitung mitzuwirken. Beispielsweise kann das Betriebssystem 11 ein herkömmliches oder fachspezifische Computer-Betriebssystem sein, das den Betrieb und das Zusammenwirken der internen und externen Hardware eines Computers steuert. Zu Beispielen von Betriebssystemen 11 zählen etwa Windows, Android, iOS, macOS, Linux, UNIX im Bereich von Personalcomputern, Tablets und Smartphones, QNX, Elektrobit OS, ROS, AUTOSAR im Automotivebereich oder proprietäre Produkte verschiedener Hersteller. Je nach Detaillierungsgrad der Darstellung des Hardwaresystems 1 kann ein einzelnes Betriebssystem 11 auch mehrere Hardwarekomponenten 7 zugeordnet sein. Dies ist beispielsweise dann der Fall, wenn das Hardwaresystem 1 ein Computersystem ist (oder umfasst), dessen interne Hardwarekomponenten 7 gesteuert vom Betriebssystem über entsprechende Bussysteme miteinander kommunizieren. Je nach Systemgrenzen und Modellierung können jedoch auch "kleinere", "größere" oder "verschachtelte" Einheiten als Hardwarekomponenten 7 definiert werden, wobei in dem Fall das jeweilige Regelwerk als Betriebssystem verstanden wird, das die Funktionalität dieser Einheit bestimmt.

Als Betriebssystem 11 wird im Zusammenhang mit der gegenständlichen Beschreibung somit eine Zusammenstellung von Programmanweisungen verstanden, die die Funktion der Systemressourcen einer Hardwarekomponente 7 und/oder einer Gruppe an Hardwarekomponenten 7 und/oder eines gesamten Hardwaresystems 1, bzw. die darin ablaufenden Datenflüsse steuert. In einem Hardwaresystem 1 können auch mehrere Betriebssysteme 11 vorgesehen sein.

Auch wenn der Detaillierungsgrad der Darstellung des Hardwaresystems 1 dieses Hardwaresystem 1 an sich nicht verändert, wird darauf hingewiesen, dass die Art diese Darstellung bzw. Einteilung in Hardwarekomponenten 7 wesentlich ist für den später beschriebenen Schritt der Modellierung, d.h. der Erstellung eines Simulationsmodells 5 des Hardwaresystems 1.

In Abhängigkeit von Parameterdaten 13 ergeben sich aus einer Anwendungssoftware 12 unterschiedliche Datenverarbeitungsaufgaben 2, die von dem Hardwaresystem 1 bzw. den einzelnen Hardwarekomponenten 7 abgearbeitet werden. Als "Datenverarbeitungsaufgabe" 2 kann im Zusammenhang mit der gegenständlichen Erfindung jeder Prozessschritt (bzw. jede Gruppe an Prozessschritten) angesehen werden, der (die) von einer Hardwarekomponente 7 oder von mehreren Hardwarekomponenten 7 gemeinsam ausgeführt wird. Insbesondere werden im Zusammenhang mit der gegenständlichen Offenbarung als Datenverarbeitungsaufgabe Prozessschritte angesehen, bei denen es zu einem Datenfluss kommt.

Als "Datenflüsse" werden im Zusammenhang mit der gegenständlichen Offenbarung insbesondere bezeichnet:
- das Erstellen einer Kopie eines an einer Speicheradresse einer Speichereinheit 3 gespeicherten Datums an einer anderen Speicheradresse derselben Speichereinheit 3 oder einer anderen Speichereinheit 3,
- das Verändern eines Datums oder der Kopie eines Datums,
- das Löschen eines an einer Speicheradresse einer Speichereinheit 3 gespeicherten Datums,
- das Übermitteln eines Datums von einer Hardwarekomponente 7 über eine von mehreren Hardwarekomponenten genutzte Kommunikationseinrichtung 8 zu einer (oder mehreren) anderen Hardwarekomponente(n) 7, sowie
- das Übermitteln und Empfangen von Daten über externe Schnittstellen des Hardwaresystems 1.

Als "Parameterdaten" 13 werden im Zusammenhang mit der gegenständlichen Beschreibung alle programmextern gesetzten Einflussfaktoren bezeichnet, die den Ablauf der Anwendungssoftware 12 beeinflussen. Parameterdaten 13 können vom Entwickler oder Anwender gewählte Einstellungen betreffen, oder sich aus bestimmten Umgebungsbedingungen ergeben, oder Grundeinstellungen, Default-Werte, Betriebsmodi, etc. vorgeben, die typischerweise in Konfigurationsdateien (manchmal "INI" oder "CFG" Dateien genannt) definiert sind. Ein anderes Beispiel solcher Parameterdaten 13 sind Sensordaten, die in dem Hardwaresystem 1 (das beispielsweise ein in einem Fahrzeug eingebettetes System sein kann) gemäß der Anwendungssoftware 12 verarbeitet werden. Im realen Hardwaresystem 1 ergeben sich diese Parameterdaten 13 somit aus den aktuellen Umgebungsbedingungen, im Zuge einer Simulation des Hardwaresystems 1 können entsprechende Parameterdaten 13 als Test Cases bereitgestellt und abgearbeitet werden.

Durch die übereinandergestapelte Darstellung der Symbole für das Betriebssystem 11, die Anwendungssoftware 12 und die Parameterdaten 13 soll sichtbar gemacht werden, dass jeweils mehrere Betriebssysteme und/oder Anwendungssoftwareeinheiten und/oder Parameterdatensätze für ein Hardwaresystem 11 relevant sein können.

Aufgrund der komplexen Architektur des Hardwaresystems 1 und des zugeordneten Betriebssystems 11 bzw. der zugeordneten Betriebssysteme 11, und aufgrund der Struktur der mit modernen Programmiertools erstellten Anwendungssoftware 12 ist es mittels statischer Methoden nicht mehr möglich, anhand des Quellcodes der Anwendungssoftware 12 vollständig vorherzusagen, welche Datenflüsse eine Datenverarbeitungsaufgabe in einem bestimmten Hardwaresystem 1 auslösen wird. Auch kann die Prüfung nur anhand einer begrenzten Anzahl an beispielhaften Parameterdaten 13 erfolgen. Genau diese können aber zum Beispiel durch unbewusste Informationsflüsse über Nebenwege Schwachstellen eröffnen, die für einen Angriff ausgenutzt werden können.

Es ist aber nicht möglich, die in einem Hardwaresystem 1 ablaufenden Datenflüsse zu überwachen, da dazu eine spezielle Hardware erforderlich wäre. Eine Fehleranalyse anhand einer speziellen Hardware ist jedoch für die unveränderte eigentliche Hardware nur eingeschränkt aussagekräftig.

Um einen Einblick in die an sich nicht einsehbaren Datenflüsse zu erhalten, wird erfindungsgemäß das Hardwaresystem 1 als ein in einer Simulationsumgebung 4 lauffähiges Simulationsmodell 5 abgebildet.

Die Simulationsumgebung 4 kann eine beliebige geeignete Simulationsplattform sein, die in der Lage ist, die Datenflüsse, die während der Ausführung einer Datenverarbeitungsaufgabe auftreten, im Simulationsmodell 5 des Hardwaresystems 1 zu simulieren, um sie so beobachtbar zu machen.

Die Simulation in der Simulationsumgebung 4 erlaubt es, die von den einzelnen Hardwarekomponenten 7 ausgeführten Datenflüsse zu beobachten und zu protokollieren. Diese Beobachtung und Protokollierung ist vorzugsweise auf kritische Daten beschränkt, die vor der Ausführung der Simulation über eine entsprechende Benutzerschnittstelle 25 eine Steuerungs- und Überwachungssystems 24 festgelegt und in einer "Definition kritischer Daten" 6 der Simulationsumgebung 4 bereitgestellt werden. Das Steuerungs- und Überwachungssystem 24 erlaubt es einem Benutzer, über die Benutzerschnittstelle 25 alle Definitionen und Anweisungen zu erstellen, die für den Ablauf der Simulation im der Simulationsumgebung 4 erforderlich sind, einschließlich der Modellierung des Simulationsmodells 5, der Definition kritischer Daten 6, dem Starten und Abbrechen eines Simulationslaufs und der Definition bzw. Auswahl von Parameterdaten 13 bzw. Test-Cases.

Techniken und Systeme, die ein Abbilden des Hardwaresystems 1 in ein Simulationsmodell 5 erlauben, sind im Fachbereich bekannt und wurden beispielsweise von Ye, X., Fan, D., Sun, N., Tang, S., Zhang, M., & Zhang, H. in dem Artikel "SimICT: A fast and flexible framework for performance and power evaluation of large-scale architecture", September 2013, in: Proceedings of the 2013 International Symposium on Low Power Electronics and Design (S. 273-278), IEEE Press, beschrieben.

Das Simulationsmodell 5 kann beispielsweise auch nur einen Teil eines größeren Gesamtsystems abbilden, etwa wenn nicht alle Bestandteile des Gesamtsystems in einer Software simulierbar sind, wenn die Erstellung eines vollständigen Simulationsmodells zu aufwändig wäre oder wenn eine solche Simulation zu viel Rechenzeit benötigen würde. In diesem Fall können für den Datenfluss nicht relevante Teile als reale Hardwareelemente an die Simulationsumgebung 4 angekoppelt werden, etwa in der Art einer Hardware-in-the-Loop-Simulation. In ähnlicher Weise kann die Simulationsumgebung 4, auf der das Simulationsmodell 5 läuft, mit einer (oder mehreren) weiteren Simulationsumgebung(en) Daten austauschen, wobei die weitere Simulationsumgebung Elemente simuliert, deren Datenfüsse nicht gemäß dem erfinderischen Verfahren untersucht werden müssen, und daher einfacher aufgebaut sein kann.

In der Simulation führt das Simulationsmodell 5 Datenverarbeitungsaufgaben 2 aus, die sich aus der Anwendungssoftware 12 ergeben, wobei die Parameterdaten 13 auf Basis zuvor definierter Test-Cases ermittelt werden. Es können dabei beispielsweise ein Softwareprogramm als Ganzes oder einzelne Teile davon abgearbeitet werden. Die Test Cases können dabei beispielsweise auf einen möglichst realistischen Ablauf des Hardwaresystems 1 ausgelegt sein, sie können aber auch besondere Szenarien darstellen oder Betriebsbedingungen in Grenzbereichen betreffen. Verfahren zur Erstellung und Optimierung von Test Cases im Zusammenhang mit Fahrassistenzsystemen für Fahrzeuge sind beispielsweise in der WO 2015/067649 A1 offenbart und werden darin als "Testszenario" bezeichnet. Während die Simulationsumgebung 4 das Simulationsmodell 5 gemäß derartiger Test-Cases ablaufen lässt, wird die Erstellung, Übermittlung, Verarbeitung/Verknüpfung und Löschung physischer Kopien kritischer Daten im Simulationsmodell 5 von dem Steuerungs- und Überwachungssystem 24 beobachtet und protokolliert.

Nach Ablauf der Simulation (oder währenddessen) wird anhand der protokollierten Daten vom Steuerungs- und Überwachungssystem 24 eine Auswertung 14 erstellt, die gegebenenfalls auch eine graphische Darstellung umfasst. Die Auswertung 14 zeigt dabei insbesondere Übermittlungsvorgänge kritischer Daten über leitungsgebundene und/oder kabellose Datenverbindungen, sowie die Erstellung und das Löschen physischer Kopien kritischer Daten an beliebigen Speicherorten in der als Simulationsmodell 5 modellierten Darstellung des Hardwaresystems 1. Von besonderem Interesse sind Instanzen kritischer Daten, die nach Ablauf der Simulation in einer Speichereinheit 3 vorhanden sein können. Dies kann der Fall sein, wenn eine Kopie eines kritischen Datums 6 nach Ablauf der Simulation (bzw. nach Ablauf einer abgegrenzten Datenverarbeitungsaufgabe 2 oder nach Löschung des kritischen Datums 6 am ursprünglichen Speicherort) noch nicht gelöscht bzw. überschrieben wurde, und daher unentdeckter Weise an einer bestimmten Adresse in einer der Speichereinheiten 3 noch vorhanden ist.

Erfindungsgemäß werden in Auswertung 14 die Speichereinheiten 3 und/oder die Kommunikationseinrichtungen 8 und/oder die Kommunikationseinheiten 9 jeweils in eine "erlaubte Domäne" 15 und eine "verbotene Domäne" 16 eingeteilt werden. Die Domänen können beispielsweise anhand ganzer Speichereinheiten 3, oder bestimmter Adressräume in Speichereinheiten 3, anhand von Busadressen oder anhand von Hardwarekomponenten 7 definiert werden, wobei die Definition bzw. Einteilung ebenfalls über das Steuerungs- und Überwachungssystem 24 erfolgen kann.

Das Simulationsmodell 5 kann nach Bedarf das zu exekutierende Hardwaresystem 1 in einen definierbaren Detailierungsgrad darstellen. Beispielsweise kann das Simulationsmodell 5 auf der Ebene von CPU-Befehlssätzen (CPU-Instruction-Ebene), oder auf einer Hardwaregatter-Ebene modelliert werden. Der nötige Detaillierungsgrad hängt zusammen mit der Art von Angriff, gegen den getestet werde soll. Um unerwünschte Datenflüsse aufgrund von Softwarefehlern zu finden, reicht beispielsweise eine Simulation auf Instruktionsebene der CPU aus. Um unerwünschte Datenflüsse aufgrund von Lücken in der Hardware (wie zum Beispiel bei den als SPECTRE und MELTDOWN bekannten Sicherheitslücken) oder Cache-Attacks zu finden, muss beispielsweise auf HW- / Gatter-Ebene simuliert werden.

Das Hardwaresystem 1 kann insbesondere auch Subsysteme, wie etwa solche mit Speicherdirektzugriff, Peripheriegeräte, etc. und Kommunikationsschnittstellen umfassen.

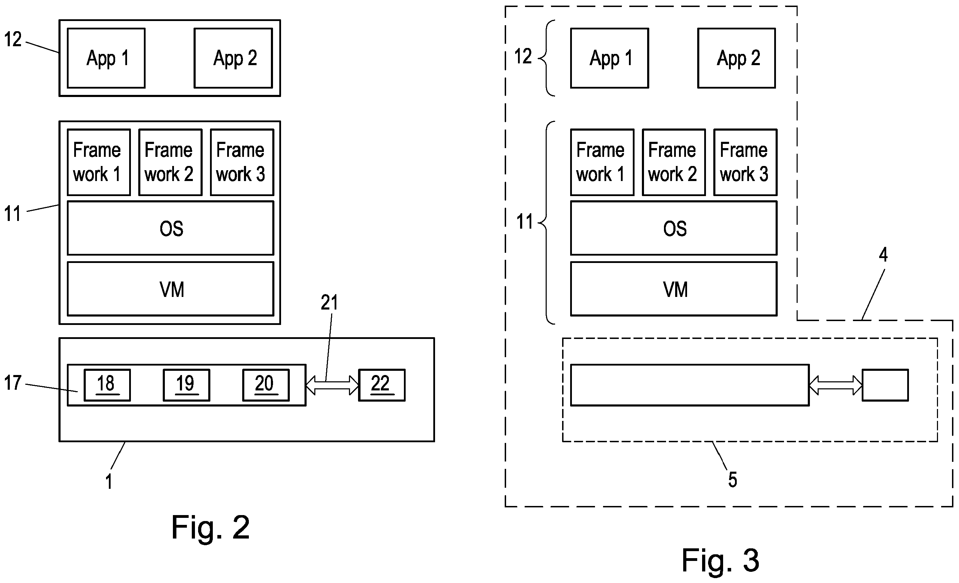

Fig. 2 zeigt ein konkretes Beispiel eines Hardwaresystems 1, auf dem ein Betriebssystem 11 läuft, mit dem eine Anwendungssoftware 12 ausgeführt werden kann. Das Hardwaresystem 1 ist gemäß einer üblichen Computerarchitektur aufgebaut, wobei ein Prozessor 17 einen Prozessor-Kern 18, einen Prozessor-Cache 19 und ein Prozessor-IO 20 aufweist. Der Prozessor 17 kann über eine Bus-Architektur 21 mit weiteren Komponenten 22 kommunizieren. Die Einheit aus Prozessor-Kern 18, Prozessor-Cache 19, Prozessor-IO 20, Bus-Architektur 21 und weiteren Komponenten 22 kann als cyberphysikalisches System betrachtet werden, welches sich mit der (realen) Umgebung (typischerweise über Sensorik und Aktuatoren) austauscht. Solch ein cyberphysikalisches System könnte beispielsweise ein automobiles Steuergerät (ECU) sein.

Auf dem Hardwaresystem 1 läuft ein Betriebssystem 11, mit dem Anwendungssoftware 12 abgearbeitet werden kann.

Im Sinne der im Zusammenhang mit Fig. 1 vorgenommenen generischen Beschreibung entspricht der Prozessor 17 der Fig. 2 beispielsweise einer ersten Hardwarekomponente 7a, der Prozessor-Kern 18 entspricht der Prozessoreinheit 10, der Prozessor-Cache 19 entspricht der Speichereinheit 3, das Prozessor-IO 20 entspricht der Kommunikationseinheit 9, die BUS-Anordnung 21 entspricht der Kommunikationseinrichtung 8 und die weiteren Komponenten 22 können andere Hardwarekomponenten 7 umfassen. Wie bereits erwähnt ist auch eine andere Modellierung, beispielsweise auf einer detaillierteren Ebene möglich.

In Fig. 3 ist eine Modellierung des Hardwaresystems 1 der Fig. 2 in ein Simulationsmodell 5 beispielhaft dargestellt, das unter Berücksichtigung des Betriebssystems 11 und der Anwendungssoftware 12 von einer Simulationsumgebung 4 als Simulation des Hardwaresystems 1 betrieben werden kann.

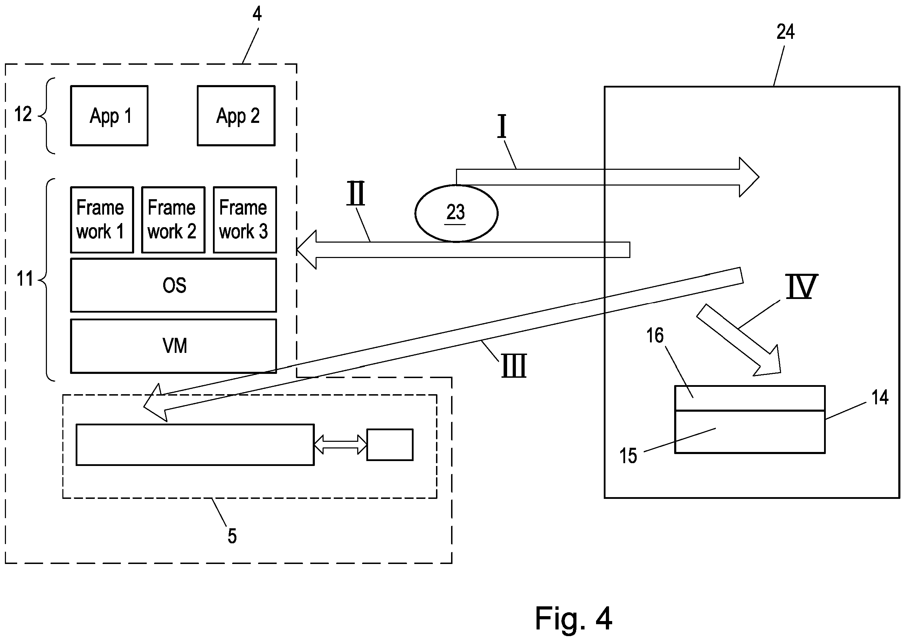

Fig. 4 zeigt in einer schematischen Darstellung die Schritte, die bei einem Testdurchlauf entsprechend dem erfindungsgemäßen Verfahren ausgeführt werden. Ein Tester 23 kann über die Benutzerschnittstelle 25 des Steuerungs- und Überwachungssystems 24 die Simulationsumgebung 4 bedienen, wobei in der Darstellung der Fig. 4 die Modellierung des Simulationsmodells 5 bereits abgeschlossen ist. Im Definitionsschritt I definiert der Tester die kritischen Daten 6, wobei diese Definition insbesondere auf einer Analyse der Hardwaresystems 1 und der darauf ablaufenden Anwendungssoftware 12 basiert. Zu überwachende kritischen Daten 6 werden vom Anwender beispielsweise durch eine spezielle Markierung festgelegt, wobei dies direkt in der Software erfolgen kann, d.h. vor dem Kompilieren. Dazu ist zumindest teilweise ein Zugang zum Quellcode und/oder zu Debug-Informationen, wie beispielsweise Symbol Files, der Anwendungssoftware 12 erforderlich. Gegebenenfalls kann die Festlegung der Definition der kritischen Daten auch durch eine Angabe von Dateieigenschaften, z.B. Attributen zum Dateninhalt, zum Entstehungszeitpunkt, zum Verarbeitungszeitpunkt, zur Adresse im Speicher, etc. erfolgen, was auch großteils ohne Zugriff auf den Quellcode möglich ist.

Als "kritische Daten" werden demgemäß im Zusammenhang mit der gegenständlichen Offenbarung insbesondere Daten bezeichnet, die in einem Definitionsschritt entweder von einer durchführenden Person (z.B. einem Programmierer oder dem Tester 23) oder anhand zuvor definierter Eigenschaften als kritische Daten definiert wurden. Die Kriterien zur Definition der kritischen Daten sind insbesondere vom jeweiligen Einzelfall und der zu untersuchenden Hardwaresystem und/oder Datenverarbeitungsaufgabe abhängig. Der Durchschnittsfachmann ist bei Kenntnis der hierin offenbarten Lehren in der Lage, die Definition kritischer Daten vorzunehmen.

Im Zusammenhang mit der Definition der kritischen Daten 6 können Regeln aufgestellt, z.B. "Grenzen" beschrieben werden, die von den überwachten kritischen Daten 6 nicht "überschritten" werden dürfen. Diese Grenzen können sich auf bestimmte Teile der Hardware, bestimmte Speicherbereiche, bestimmte Teile in der CPU, etc. beziehen und teilen diese Ressourcen jeweils in eine erlaubte Domäne 15 und eine verbotene Domäne 16 ein. Diese Definitionen können auch weitere Einschränkungen beinhalten, beispielsweise bestimmte Zeitabschnitte, oder Abhängigkeiten von Systemzuständen. Als weiteres Merkmal zur Definition der Domäne kann gegebenenfalls der Kontext, in dem der Prozess ausgeführt wird, genutzt werden, beispielsweise unter welchem (bzw. für welchen) User der Prozess exekutiert wird, oder ob der Prozessor im User- oder Kernel-Modus läuft, etc.

Während des Definitionsschritts I erfolgt auch eine Auswahl oder Definition der Test-Cases, die im Zuge der Simulation abgearbeitet werden sollen. Auch kann die Modellierung des Simulationsmodells 5 in diesem Schritt erfolgen, oder diese Modellierung angepasst werden.

Es ist darauf hinzuweisen, dass die Schritte der Modellierung des Simulationsmodells 5, der Definition der kritischen Daten 6, der Auswahl der Test-Cases und der Definition der Regeln und Grenzen in einer beliebigen Reihenfolge oder auch parallel zueinander oder in iterativen Schritten durchgeführt werden können.

Im Schritt II wird die zu untersuchende Anwendungssoftware 12 in der Simulationsumgebung anhand der Anwendungs- bzw. Testfälle aufgesetzt und in Schritt III wird die Simulation in der Simulationsumgebung 4 gestartet und die laufende Simulation vom Steuerungs- und Überwachungssystem 24 überwacht. Da die zu testende Anwendungssoftware und die gegebenenfalls auch zu testende Teile darunter (Frameworks, Laufzeitbibliotheken, Betriebssystem,...) sowie die Hardware in der Simulationsumgebung 4 "läuft", können alle Zugriffe auf kritische Daten, bzw. der Fluss der kritischen Daten (und deren Kopien) beobachtet, überwacht und mit den definierten Regeln verglichen werden. Regelverstöße können protokolliert und/oder als Warnmeldung gemeldet werden, und bilden damit Auffindungen zu möglichen Data-Leaks. Darüber hinaus kann durch Aufzeichnung von Kontext und Vorgeschichte zu diesen Auffindungen (der komplette Ablauf in der Simulationsumgebung 4 kann durch Tracing-Verfahren dokumentiert werden) wichtige Unterstützung in der weiteren Diagnose (bzw. dem Debugging) gegeben werden.

Das Steuerungs- und Überwachungssystem 24 hat zumindest teilweise Zugriff auf die internen Register und Zustände der Simulationsumgebung 4, was einer typischen Debugger-Schnittstelle ähnelt.

Somit werden die kritischen Daten 6, jeder Zugriff darauf, und alle Veränderung, die sich durch Aktivitäten von Software und Hardware aus diesen Daten ableiten lassen (z.B. Flags in CPU Register) beobachtet und überwacht. Der Weg der kritischen Daten kann von dem Steuerungs- und Überwachungssystems 24 gespeichert und in der Auswertung 14 beispielsweise in Form von Spuren ("Traces") in einer Baumstruktur dargestellt werden (Schritt IV).

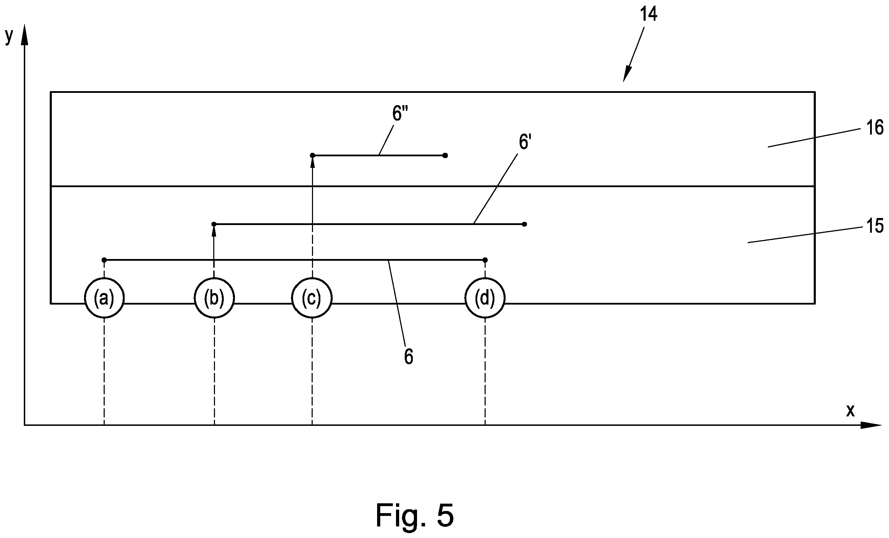

In Fig. 5 ist eine solche Auswertung 14 für ein kritisches Datum 6 mit einer Baumstruktur beispielhaft dargestellt. Die x-Achse stellt den Zeitablauf der Simulation dar, auf der y-Achse sind die in eine erlaubte Domäne 15 und eine verbotene Domäne 16 eingeteilten Abschnitte der Hardware dargestellt.

In dem in Fig. 5 dargestellten Beispiel beginnt zum Zeitpunkt (a) die Überwachung des kritischen Datums 6 (beispielsweise wenn das kritische Datum in einen Speicher einer Hardwarekomponente 7 geladen wird). Zum Zeitpunkt (b) wird im Zuge eines Prozessschrittes eine Kopie des kritischen Datums erstellt, die als erste Instanz 6' bezeichnet ist. Die erste Instanz befindet sich in einem Speicherbereich, der der erlaubten Domäne 15 zugeordnet ist. Zum Zeitpunkt (c) wird aus der ersten Instanz durch Kopieren eine zweite Instanz 6" erzeugt und in einem Speicher abgelegt, der der verbotenen Domäne 16 zugeordnet ist. Dieser Vorgang wird von dem Steuerungs- und Überwachungssystems 24 erkannt und berichtet. Gegebenenfalls kann eine Warnmeldung erzeugt und/oder der Simulationslauf abgebrochen werden. Zum Zeitpunkt (d) wird das Original des kritischen Datums zerstört (also beispielsweise überschrieben oder gelöscht). Die erste Instanz 6' existiert zu diesem Zeitpunkt jedoch noch (allerdings in der erlaubten Domäne). Auch dies wird vermerkt und gemeldet. Auf diese Weise können alle Instanzen des überwachten kritischen Datums 6 sowie Zugriffe darauf erkannt werden. Eine neue Instanz bildet typischerweise den Start-Knoten eines neuen Sub-Trees.

In der Praxis könnte die oben beschriebene Auswertung 14 beispielsweise den folgenden Vorgang dokumentieren: Ein überwachtes Datum wird vom externen Speicher in ein CPU Register geladen. Damit kann aber typischerweise eine Kopie im Cache (u.U. sogar in mehreren Levels) entstehen, die auch existiert, wenn das Datum im CPU Register gelöscht oder überschrieben wird. Diese Kopie (d.h. die erste Instanz 6`) muss also neu überwacht werden und bildet daher einen neuen Ast im Graphen in der entsprechenden Lage (zum Beispiel dem Cache zugeordnet). Auch ermöglicht die Übertragung eines Datums über einen Bus potentiell allen am gleichen Bus angeschlossenen Empfängern dieses Datum zu diesem Zeitpunkt zu lesen (und in Folge weiter zu kopieren oder verarbeiten). Auch das wird mit einem neuen Zweig im Graphen dokumentiert und weiter verfolgt.

Eine weitere Möglichkeit ist die Verarbeitung eines überwachten Datums. Beispielsweise wird durch einen Shift-Befehl ein Datum binär um eine Anzahl von Bitpositionen verschoben und damit geändert. Das Ergebnis ist vom überwachten Datum abhängig und wird somit ebenfalls als neuer Zweig im Graphen dokumentiert und weiter verfolgt.

Die hierin offenbarte Vorgehensweise ermöglicht beispielsweise die Entwicklung einer neuen Familie von Tools zum Test und zur Diagnose von Eigenschaften wie "Confidentiality" und "Privacy" in Steuergeräten und Bussystemen, insbesondere in Fahrzeugen. Insbesondere in Zusammenhang mit der Entwicklung automationsunterstützter und autonomer Fahrzeuge werden kommende Steuergeräte für den Antriebsstrang, die Fahrfunktionen, die Fahrzeugkommunikation, den Passagierkomfort (auch eHealth) und das Nutzlast-Management immer mehr personenbezogene bzw. missionskritische Daten verarbeiten. Solche Daten dürfen nur in definierter Art und Weise offenbart bzw. weitergegeben werden, und keinesfalls zufällig oder aufgrund gezielter Angriffe abgreifbar werden. Mithilfe der gegenständlichen Erfindung ist es möglich, unterschiedlichste Hardwaresysteme in einer beliebigen Detailtiefe auf sicherheitsrelevante Datenflüsse zu testen. Die Tests sind auch auf eine beliebige Breite skalierbar, wobei beispielsweise mehrere interagierende Systeme simuliert werden können. Durch die ebenfalls skalierbare Detailtiefe können Fehler auf verschiedenen Ebenen, sei es in der Applikations-Software, im Betriebssystem oder bereits im Hypervisor, oder noch tiefer, direkt in der Hardwareimplementierung (dies kann z.B. für Side-Channel-Attacks relevant sein) aufgespürt werden.

### Bezugszeichen:

Hardwaresystem 1
Datenverarbeitungsaufgabe 2
Speichereinheit 3
Simulationsumgebung 4
Simulationsmodell 5
kritischer Daten 6
Hardwarekomponente 7
Kommunikationseinrichtung 8
Kommunikationseinheit 9
Prozessoreinheit 10
Betriebssystem 11
Anwendungssoftware 12
Parameterdaten 13
Auswertung 14
erlaubte Domäne 15
verbotene Domäne 16
Prozessor 17
Prozessor-Kern 18
Prozessor-Cache 19
Prozessor-IO 20
BUS-Anordnung 21
weitere Komponente 22
Tester 23
Steuerungs- und Überwachungssystems 24
Benutzerschnittstelle 25

## Patentansprüche

1. Verfahren zur Detektion sicherheitsrelevanter Datenflüsse, welche in einem Hardwaresystem (1) während der Ausführung von zumindest einer Datenverarbeitungsaufgabe (2) auftreten,
wobei zur Abbildung des Hardwaresystems (1) in ein Simulationsmodell (5) das Hardwaresystem (1) in eine Vielzahl an Hardwarekomponenten (7) eingeteilt wird, die über zumindest eine Kommunikationseinrichtung (8) miteinander verbunden sind und über diese Kommunikationseinrichtung (8) Daten austauschen können, wobei jede Hardwarekomponente (7) zumindest eine Kommunikationseinheit (9), zumindest eine Speichereinheit (3) und zumindest eine Prozessoreinheit (10) aufweist,
wobei das Hardwaresystem (1) als ein in einer Simulationsumgebung (4) lauffähiges Simulationsmodell (5) abgebildet wird, und die Datenflüsse, die während der Ausführung einer Datenverarbeitungsaufgabe (2) auftreten, mit dem Simulationsmodell (5) des Hardwaresystems (1) simuliert werden, wobei während der Simulation in der Simulationsumgebung (4) die von den einzelnen Hardwarekomponenten (7) ausgeführten Datenflüsse beobachtet und protokolliert werden,
wobei die Datenflüsse ein Erstellen einer Kopie eines an einer Speicheradresse einer Speichereinheit (3) gespeicherten Datums an einer anderen Speicheradresse derselben Speichereinheit (3) oder einer anderen Speichereinheit (3), das Verändern eines Datums oder der Kopie eines Datums, das Löschen eines an einer Speicheradresse einer Speichereinheit (3) gespeicherten Datums, das Übermitteln eines Datums von einer Hardwarekomponente (7) über eine von mehreren Hardwarekomponenten genutzte Kommunikationseinrichtung (8) zu einer oder mehreren anderen Hardwarekomponente(n) (7), oder das Übermitteln und Empfangen von Daten über externe Schnittstellen des Hardwaresystems (1) beschreiben,
wobei kritische Daten (6) definiert werden, die in zumindest einer Speichereinheit (3) des Hardwaresystems (1) gespeichert sein und/oder über eine Schnittstelle in das Hardwaresystem (1) transferiert werden können,
**dadurch gekennzeichnet, dass** Abschnitte des Hardwaresystems (1) in eine erlaubte Domäne (15) und eine verbotene Domäne (16) eingeteilt werden,
**dass,** zumindest die folgenden Datenflüsse als sicherheitsrelevante Datenflüsse identifiziert werden:
- Übermitteln eines kritischen Datums (6) oder Instanzen (6', 6") davon über eine Kommunikationseinrichtung (8) der verbotenen Domäne (16),
- Löschen eines kritischen Datums (6) während eine Instanz (6', 6") des kritischen Datums (6) fortbesteht,
- Erstellung einer Instanz (6', 6") eines kritischen Datums (6) in der verbotenen Domäne (16)
- Fortbestand eines kritischen Datums (6) nach einem bestimmten Zeitpunkt und/oder Systemzustand, insbesondere nach Fertigstellung der Datenverarbeitungsaufgabe (2)
**und dass die** Erstellung, Übermittlung und Löschung von kritischen Daten (6) und von Instanzen (6', 6") der kritischen Daten (6) im Simulationsmodell (5) während des Ausführens der Datenverarbeitungsaufgabe (2) überwacht werden und die sicherheitsrelevanten Datenflüsse identifiziert und protokolliert werden.

2. Verfahren nach Anspruch 1, **dadurch gekennzeichnet, dass** die Definition kritischer Daten (6) durch Definition von Dateneigenschaften erfolgt.

3. Verfahren nach einem der Ansprüche 1 bis 2, **dadurch gekennzeichnet, dass** bei Identifizieren zumindest bestimmter sicherheitsrelevanter Datenflüsse eine Warnmeldung erstellt wird.

4. Verfahren nach einem der Ansprüche 1 bis 3, **dadurch gekennzeichnet, dass** die identifizierten sicherheitsrelevanten Datenflüsse in einer Auswertung (14) gespeichert werden.

5. Verfahren nach Anspruch 4, **dadurch gekennzeichnet, dass** die Auswertung (14) graphisch dargestellt wird.

6. Verfahren nach einem der Ansprüche 1 bis 5, **dadurch gekennzeichnet, dass** der Ablauf der Simulation protokolliert wird.

7. Verfahren nach einem der Ansprüche 1 bis 6, **dadurch gekennzeichnet, dass** sich die Datenverarbeitungsaufgabe (2) aus dem Ausführen einer Anwendungssoftware (12), welche gegebenenfalls unter Abarbeitung definierter Test-Cases betrieben wird, ergibt.

## Claims

1. Method for detecting safety-relevant data streams, which occur in a hardware system (1) during the execution of at least one data processing task (2),
wherein, in order to map the hardware system (1) onto a simulation model (5), the hardware system (1) is divided into a variety of hardware components (7), which are connected to one another via at least one communication device (8) and which can exchange data via this communication device (8), each hardware component (7) having at least one communication unit (9), at least one storage unit (3) and at least one processor unit (10); wherein the hardware system (1) is mapped onto a simulation model (5) capable of running in a simulation environment (4), and the data streams, occurring during the execution of a data processing task (2), are simulated with the simulation model (5) of the hardware system (1), wherein the data streams executed by the individual hardware components (7) are observed and logged during the simulation in the simulation environment (4); wherein the data streams comprise creating a copy of a datum stored at a storage address of a storage unit (3) at another storage address of the same storage unit (3) or a different storage unit (3), changing a datum or a copy of a datum, deleting a datum stored at a storage address of a storage unit (3), transmitting a datum from a hardware component (7) via a communication device (9) used by a plurality of hardware components (7) to one or more other hardware components (7) or transmitting and receiving data via external interfaces of the hardware system (1); wherein critical data (6) are defined, which may be stored in at least one storage unit (3) of the hardware system (1) and/or transferred to the hardware system (1) via an interface, **characterized in that** portions of the hardware system (1) are divided into a permitted domain (15) and a prohibited domain (16); **in that** at least the following data streams are identified as security relevant data streams:
- transmitting a critical datum (6) or instances (6', 6") thereof via a communication device (8) of the prohibited domain (16)
- deleting a critical datum (6) while an instance (6', 6") of the critical datum (6) continues to exist;
- creating an instance (6', 6") of a critical datum (6) in the prohibited domain (16);
- an continued existence of a critical datum (6) after a certain point in time and/or system status, in particular after completion of the data processing task;
**and in that** the creation, transmission and deletion of critical data (6) and instances (6', 6") of critical data (6) in the simulation model (5) during the execution of the data processing task (2) is monitored and the security relevant data streams are identified and logged.

2. Method according to claim 1, **characterized in that** critical data (6) can be defined by defining data properties.

3. Method according to any of claims 1 to 2, **characterized in that** a warning message is created when at least certain security-relevant data streams are identified.

4. Method according to any of claims 1 to 3, **characterized in that** the identified safety-relevant data streams are stored in an evaluation (14).

5. Method according to claim 4, **characterized in that** the evaluation (14) is displayed graphically.

6. Method according to any of claims 1 to 5, **characterized in that** the course of the simulation is logged.

7. Method according to any of claims 1 to 6, **characterized in that** the data processing task (2) results from the execution of application software (12), which is operated, if applicable, while processing defined test cases.

## Revendications

1. Procédé destiné à détecter des flux de données liés à la sécurité, qui se produisent dans un système matériel (1) pendant l'exécution d'au moins une tâche de traitement de données (2),
dans lequel, pour la représentation du système matériel (1) dans un modèle de simulation (5), le système matériel (1) est réparti en une multitude de composants matériels (7) qui sont reliés les uns aux autres par l'intermédiaire d'au moins un dispositif de communication (8) et qui peuvent échanger des données par l'intermédiaire de ce dispositif de communication (8), chaque composant matériel (7) présentant au moins une unité de communication (9), un moins une unité de stockage (3) et au moins une unité de processeur (10),
dans lequel le système matériel (1) est représenté comme un modèle de simulation (5) pouvant fonctionner dans un environnement de simulation (4) et les flux de données, qui se produisent pendant l'exécution d'une tâche de traitement de données (2), sont simulés à l'aide du modèle de simulation (5) du système matériel (1), les flux de données exécutés par les composants matériels (7) individuels pendant la simulation dans l'environnement de simulation (4) étant observés et consignés,
dans lequel les flux de données décrivent la création d'une copie d'une donnée enregistrée en une adresse mémoire d'une unité de stockage (3) en une autre adresse mémoire de la même unité de stockage (3) ou d'une autre unité de stockage (3), la modification d'une donnée ou de la copie d'une donnée, la suppression d'une donnée enregistrée en une adresse mémoire d'une unité de stockage (3), la transmission d'une donnée d'un composant matériel (7) par l'intermédiaire d'un dispositif de communication (8) utilisé par plusieurs composants matériels à un ou plusieurs autre(s) composant(s) matériel(s) (7) ou la transmission et la réception de données par l'intermédiaire d'interfaces externes du système matériel (1),
dans lequel des données critiques (6) sont définies, qui sont enregistrées dans au moins une unité de stockage (3) du système matériel (1) et/ou qui peuvent être transférées par l'intermédiaire d'une interface dans le système matériel (1),
**caractérisé en ce que** des sections du système matériel (1) sont divisées en un domaine permis (15) et un domaine interdit (16),
**en ce qu'**au moins les flux de données suivants sont identifiés en tant que flux de données liés à la sécurité :
- transmission d'une donnée critique (6) ou d'instances (6', 6") de celle-ci par l'intermédiaire d'un dispositif de communication (8) du domaine interdit (16),
- suppression d'une donnée critique (6) pendant qu'une instance (6', 6") de la donnée critique (6) subsiste,
- création d'une instance (6', 6") d'une donnée critique (6) dans le domaine interdit (16),
- persistance d'une donnée critique (6) après un moment et/ou un état de système déterminé(s), en particulier après la fin de la tâche de traitement de données (2)
**et en ce que** la création, la transmission et la suppression de données critiques (6) et d'instances (6', 6") des données critiques (6) dans le modèle de simulation (5) sont surveillées pendant l'exécution de la tâche de traitement de données (2) et les flux de données liés à la sécurité sont identifiés et consignés.

2. Procédé selon la revendication 1, **caractérisé en ce que** la définition de données critiques (6) est effectuée par la définition de propriétés de données.

3. Procédé selon l'une des revendications 1 à 2, **caractérisé en ce que** lors de l'identification d'au moins certains flux de données liés à la sécurité, un message d'avertissement est créé.

4. Procédé selon l'une des revendications 1 à 3, **caractérisé en ce que** les flux de données liés à la sécurité, identifiés sont enregistrés dans une opération de validation (14).

5. Procédé selon la revendication 4, **caractérisé en ce que** l'opération de validation (14) est représentée graphiquement.

6. Procédé selon l'une des revendications 1 à 5, **caractérisé en ce que** le déroulement de la simulation est consigné.

7. Procédé selon l'une des revendications 1 à 6, **caractérisé en ce que** la tâche de traitement de données (2) est obtenue à partir de l'exécution d'un logiciel d'application (12), qui est le cas échéant exploité avec traitement de cas de test définis.
